(19) Europäisches Patentamt

European Patent Office

Office européen des brevets

(11) EP 1 696 468 A2

(12) EUROPEAN PATENT APPLICATION

(43) Date of publication:
30.08.2006 Bulletin 2006/35

(51) Int Cl.:
*H01J 61/86* (2006.01)    *H01J 61/12* (2006.01)
*G03B 21/132* (2006.01)    *H04N 5/74* (2006.01)

(21) Application number: 06250999.7

(22) Date of filing: 24.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 28.02.2005 JP 2005055091

(71) Applicant: TOSHIBA LIGHTING & TECHNOLOGY
CORPORATION
Shinagawa-ku,
Tokyo 140-8640 (JP)

(72) Inventors:
• Kashiwagi, Takahito,
c/o Toshiba Lighting &
Shinagawa-ku
Tokyo 140-8640 (JP)

• Ishida, Masazumi,
c/o Toshiba Lighting &
Shinagawa-ku
Tokyo 140-8640 (JP)
• Matsuda, Mikio,
c/o Toshiba Lighting &
Shinagawa-ku
Tokyo 140-8640 (JP)
• Uemura, Kozo,
c/o Toshiba Lighting &
Shinagawa-ku
Tokyo 140-8640 (JP)

(74) Representative: Hedley, Nicholas James Matthew
et al
Kilburn & Strode
20 Red Lion Street
London WC1R 4PJ (GB)

(54) **High-pressure discharge lamp and optical device**

(57) A high-pressure discharge lamp of the invention comprises a translucent airtight container (1) having a discharge space therein, a pair of electrodes (2) sealed in the airtight container (1), the electrodes (2) having an inter-electrode distance D of 2 mm or less and facing the discharge space, and an ionizing medium sealed in the airtight container and substantially being mercury-free while it contains thulium (Tm) halide, zinc (Zn) halide and rare gas, the zinc (Zn) halide being less than 20% to 90% by mass of all metal halides sealed in the airtight container (1), wherein a ratio $V_1/D$ of a lamp voltage $V_1$ (V) to the inter-electrode distance D (mm) satisfies the following formula.

$$20 < V_1/D < 100$$

FIG. 2

EP 1 696 468 A2

**Description**

The present invention relates to a mercury (Hg)-free high-pressure discharge lamp of short-arc type that does not substantially contain mercury, and to an optical device comprising the same.

In a mercury (Hg)-free high-pressure discharge lamp, it is known that an enclosed capacity of zinc iodide ($ZnI_2$), which is a replacement material for mercury, is to be regulated (refer to Jpn. Pat. Appln. KOKAI Publication No. 2003-303571). The Jpn. Pat. Appln. KOKAI Publication No. 2003-303571 describes that zinc iodide ($ZnI_2$) is regulated to 2 to 6 mg per unit internal volume (1cc) of an airtight container. In this case, main luminous metals are scandium iodide ($ScI_3$) and sodium iodide (NaI). The Jpn. Pat. Appln. KOKAI Publication No. 2003-303571 also describes that although enclosure of zinc iodide ($ZnI_2$) is effective in ensuring an appropriate lamp voltage in a mercury-free high-pressure discharge lamp, it entails efficiency reduction as the lamp voltage rises.

Another invention is also known that sodium (Na), thallium (T1) and dysprosium (Dy) are used as main luminous metals, holmium (Ho), thulium (Tm) and indium (In) are enclosed as accessory components, and aluminum (A1), zinc (Zn), tin (Sn), and iron (Fe) are enclosed as replacement materials for mercury (refer to Jpn. Pat. Appln. KOKAI Publication No. 2004-055140). Although Jpn. Pat. Appln. KOKAI Publication No. 2004-055140 basically relates to a mercury-contained high-pressure discharge lamp, it also describes a mercury-free high-pressure discharge lamp implemented by enclosing the above-described replacement materials for mercury.

According to the description of Jpn. Pat. Appln. KOKAI Publication No. 2003-303571, the enclosed capacity of zinc iodide ($ZnI_2$) is limited to the above range if maintaining practical efficiency is given a priority, and consequently, the lamp voltage of the mercury-free high-pressure discharge lamp reaches only half of the level of the mercury-contained high-pressure discharge lamp. Thus, a lamp current needs to be increased in order to apply a required lamp power. To meet this demand, a diameter of an electrode shaft needs to be increased, which leads to adverse effects caused by elimination of mercury from the high-pressure discharge lamp, namely, it becomes difficult to maintain airtightness of sealed parts of the electrodes, or a larger lightning circuit results in increased difficulty of circuit designing, etc.

In addition, Jpn. Pat. Appln. KOKAI Publication No. 2004-055140 has little description of a mercury-free high-pressure discharge lamp, and no specific description of a practically beneficial mercury-free high-pressure discharge lamp.

According to the study of the inventor of the present invention, unlike the description in Jpn. Pat. Appln. KOKAI Publication No. 2003-303571, the increased quantity of zinc iodide serving as a replacement material for mercury is beneficial depending on conditions. In other words, it has been found that when being coexistent with thulium halide, zinc halide can attain a clearer increase of the lamp voltage in the area of the enclosure ratio of 20% by mass or more in comparison with growth of the lamp voltage in the area of less than 20% by mass. Furthermore, it has been found that a prominent increase of the lamp voltage can be seen in the area of the enclosure ratio of 40% by mass or more, in particular.

The present invention has been made based on the above knowledge of the inventor.

An object of the invention is to provide a mercury-free high-pressure discharge lamp of short-arc type that has as high lamp voltage as that of a mercury-contained high-pressure discharge lamp, and an optical device comprising the same.

A high-pressure discharge lamp according to one aspect of the present invention comprises: a translucent airtight container having a discharge space therein; a pair of electrodes sealed in the airtight container, the electrodes having an inter-electrode distance D of 2 mm or less and facing the discharge space; and an ionizing medium sealed in the airtight container and substantially being mercury-free while it contains thulium (Tm) halide, zinc (Zn) halide and rare gas, the zinc (Zn) halide being less than 20% to 90% by mass of all metal halides sealed in the airtight container, wherein a ratio $V_1/D$ of a lamp voltage $V_1$ (V) to the inter-electrode distance D (mm) satisfies the following formula.

$$20 < V_1/D < 100$$

This summary of the invention does not necessarily describe all necessary features so that the invention may also be a sub-combination of these described features.

The invention can be more fully understood from the following detailed description when taken in conjunction with the accompanying drawings, in which:

FIG. 1 is an overall conceptual sectional view of a high-pressure discharge lamp according to an embodiment of the present invention;
FIG. 2 is an enlarged front view of an light emitting tube of the same embodiment;
FIG. 3 is a graph showing a relationship between an enclosure ratio of zinc halide to all metal halides and a potential gradient;

FIG. 4 is a graph showing a relationship between an enclosure ratio of zinc halide to all metal halides and a luminous efficiency;

FIG. 5 is a graph showing a relationship between zinc halide/thulium halide and a potential gradient;

FIG. 6 is a graph showing a relationship between zinc halide/thulium halide and a luminous efficiency; and

FIG. 7 is a schematic block diagram showing a liquid crystal projector as one embodiment of an optical device of the present invention.

In the following, respective components that can be adopted in a first embodiment of a high-pressure discharge lamp of the invention will be described. The following description also applies to other embodiments to be described later within the applicable range.

[Airtight container]

In the present embodiment, an airtight container being translucent means that visible light in a desired wavelength region that has been generated by discharging is derived to the outside. An airtight container may be made of any material as long as the material is translucent and has sufficient fire resistance to tolerate a normal operating temperature of a high-pressure discharge lamp. For example, quartz glass or translucent ceramics, etc. can be used. Examples of the translucent ceramics include translucent alumina, yttrium-aluminum-garnet (YAG), yttrium oxide (YOX), and polycrystal nonoxide, for example, polycrystal or monocrystal ceramics such as aluminum nitride (A1N). As necessary, a halogen-resistant or metal-resistant transparent coat may be formed on an inner surface of the airtight container or reformation of the inner surface of the airtight container is acceptable.

In addition, the airtight container has a discharge space therein. To surround the discharge space, the airtight container is provided with a surrounding area. The surrounding area has interior of a suitable shape, for example, a spherical shape, ellipsoidal shape, or spindle shape. Various values can be selected for the volume of the discharge space depending on rated lamp wattage, inter-electrode distance, etc., of the high-pressure discharge lamp. For example, in the case of a lamp for a liquid crystal projector, the volume of the discharge space may be 0.5 cc and 0.1 cc or less is preferable.

It is also acceptable that a pair of sealed parts is provided at both ends of the surrounding area. The pair of sealed parts is means for sealing the surrounding area where an electrode shaft is supported, and also contributing to airtight introduction of a current from a lightning circuit to the electrode. The pair of sealed parts is usually arranged at the both ends of the surrounding area. If the airtight container is made of quartz glass, sealed metal foil is preferably buried air tight inside the sealed parts as suitable airtight sealing and conducting means in order to seal electrodes and to introduce a current from the lightning circuit to the electrode under airtight condition. The sealed metal foil is means that is buried inside the sealed parts and acts as a current-conducting conductor in co-operation with the sealed parts such that the sealed parts keep the interior of the surrounding area of the airtight container airtight. If the airtight container is made of quartz glass, molybdenum (Mo) is an optimum material. A method of burying the sealed metal foil into the sealed parts is not specifically limited, but may be selected as appropriate from a depressurization sealing method, a pinch seal method, and a combination thereof.

On the one hand, examples of sealing means when the airtight container is made of translucent ceramics include frit sealing that seals by pouring, for example, high-melting frit glass between translucent ceramics and an introducing conductor, and metal sealing that uses metal in place of the high-melting frit glass. In addition, a small diameter tube communicating with the surrounding area can be formed to keep the coldest temperature in a discharge space defined in the airtight container at desired relatively high temperatures while keeping the sealed parts of the airtight container at required relatively low temperatures. In this structure, not only the sealed parts are arranged at ends of the small diameter tube, but also the electrode shaft is extended into the small diameter tube, so that a minimal space referred to as a capillary is formed between the electrode shaft and the inner surface of the small diameter tube along the axial direction of the small diameter tube.

[A pair of electrodes]

A pair of electrodes is a characteristic, prerequisite configuration of the present invention, and is sealed in an airtight container and arranged so that they are spaced and face a discharge space. Then, an inter-electrode distance to be defined between the pair of electrodes is 2 mm or less, and preferably 1 mm or less. However, when high light harvesting is demanded for use in projection, etc., the inter-electrode distance is preferably smaller, for example, 0.5 mm or less. However, since discharge is made to occur between the electrodes, the inter-electrode distance of 0 mm should not be included.

Further, examples of a material constituting an electrode fire-resistant and conductive metal such as pure tungsten (W), doped tungsten containing a dopant (e.g., one or more kinds selected from a group consisting of scandium (Sc), aluminum (A1), potassium (K) and silicon (Si)), treated tungsten containing thorium oxide, rhenium (Re) and tungsten-rhenium (W-Re) alloy.

Furthermore, in the case of a small-sized high-pressure discharge lamp, a straight rod-like wire rod or wire rod having a large diameter part formed at the end may be used as an electrode. In the case of a medium- or large-sized electrode, a coil made of the same kind of material as the electrode constituent material may be wound around the end of the electrode shaft. When a pair of electrodes runs with alternating current, the electrodes shall have a same structure. However, if a pair of electrodes runs with direct current, in general, an anode has a larger heat radiation area than a cathode as temperatures rise steeply in the former. Thus, an electrode with a thicker body can be used.

[Ionizing medium]

An ionizing medium is a characteristic component in the first embodiment, and is common to other embodiments in that it contains thulium (Tm) halide, zinc (Zn) halide, and rare gas.

(Thulium (Tm) halide)

Thulium (Tm) halide not only emits visible light with high efficiency but also contributes to boosting of the lamp voltage. In the present embodiment, the enclosed capacity of thulium (Tm) halide is not limited, in particular, if it is free. Although iodine is preferred as halogen in thulium halide because it has moderate reactivity, bromine or chlorine may be used as desired, or two or more of iodine, bromine, and chlorine may be used as desired. Further, thulium is highly effective luminous metal in increasing luminous efficiency because its peak of light emission corresponds with that of a visibility curve.

(Zinc halide)

Zinc halide is mainly enclosed as metal halide to form the lamp voltage. Although this is already known, the present embodiment is characterized in that zinc halide is enclosed at a ratio of 20% to 95% by mass, and preferably 40% to 90% by mass, into the ionizing medium to be enclosed in the airtight container. Thus, since zinc halide is enclosed at a high enclosure ratio, not only the lamp voltage is remarkably high, but also reduction of the luminous efficiency is relatively small while the zinc halide is coexistent with thulium halide. In contrast, when the enclosure ratio is less than 20% by mass, there is seen no clear increase in the lamp voltage. In particular, if zinc halide is enclosed at a ratio of 40% by mass or higher, surprisingly, a prominent growth of the lamp voltage can be seen. In addition, if the enclosure ratio exceeds 95% by mass, the enclosure ratio of thulium halide decreases correspondingly, thus reducing emission of visible light.

(Rare gas)

Rare gas mainly acts as buffer gas and initiation gas. In addition, one kind of a group consisting of Argon (Ar), Neon (Ne) and Xenon (Xe) can be enclosed alone, or two or more kinds can be mixed and enclosed. When an enclosure pressure of rare gas is 1 atmospheric pressure or more, rare gas contributes to increase of initial light flux, thus improving the light flux rising edge characteristic. Therefore, the enclosure pressure of rare gas can be set as appropriate depending on use of a high-pressure discharge lamp.

Among rare gases, xenon has greater atomic weight than other rare gases, and thus, heat conductivity is relatively small. For this reason, enclosure of 1 atmospheric pressure or more, preferably 5 atmospheric pressure or more of xenon contributes to formation of the lamp voltage immediately after lighting, and also emits white visible light while vapor pressure of halide is low and contributes to the rising edge of light flux.

$$[\text{Mathematical formula: } 20 < V_1/D < 100]$$

In the above mathematical formula, a ratio $V_1/D$ denotes a lamp voltage per unit inter-electrode distance. If the above ratio falls within the above mathematical formula, a lamp can sufficiently withstand actual use as a high-pressure discharge lamp of short-arc type. When the ratio is 20V/mm or less, however, the lamp voltage is too low, and the lamp current increases. This causes inconvenience such as that sealing airtightness becomes difficult to maintain as an electrode grows mammoth, or the lightning circuit becomes difficult to design. In addition, if the above ratio is 100V/mm or more, an light emitting tube containing the coldest part needs excessively high temperatures, and reliability of airtightness or reaction on tube walls affect the lamp characteristics. Should it be possible to prevent these, the vapor pressure would be excessively high, and a high-pressure discharge lamp would suffer from disadvantages such as elevated restriking voltage or fluctuations in discharge arc, etc.

In the present embodiment, on the basis of assumption that thulium halide or zinc halide with a predetermined enclosure ratio, and rare gas, as described above, are contained, and that the above mathematical formula is satisfied, further addition and enclosure of other metal halides as shown below are accepted.

1. (Other rare-earth metal halide)

It is acceptable that as rare-earth metal halide, other than thulium halide, that mainly emits visible light, rare-earth metal halide of one or more kinds of rare-earth metals consisting of praseodymium (Pr), cerium (Ce), holmium (Ho) and samarium (Sm) is added to thulium halide that is the above main luminous metal halide, and enclosed.

The above-mentioned rare-metal metals are useful as luminous metal second only to thulium halide, and its addition to thulium halide is acceptable. In addition, as any of the above rare-earth metals has a myriad of bright-line spectra near the peak wavelength of a visibility characteristic curve, it can contribute to improvement of the luminous efficiency.

2. (Other metal halide mainly for light emission)

It is accepted that as metal halide mainly for emission of visible light, other than those described above, thallium (T1) or/and indium (In) halide is enclosed. It is accepted that these metal halides are selectively enclosed as accessory components for the purpose of obtaining desired color rendering property and/or color temperature.

3. (Other metal halide mainly for formation of lamp voltage)

It is accepted that as halides mainly for formation of the lamp voltage, one or more kinds of metal halides selected from a group consisting of, for example, magnesium (Mg), iron (Fe), cobalt (Co), chromium (Cr), Nickel (Ni), manganese (Mn), aluminum (A1), antimony (Sb), beryllium (Be), rhenium (Re), gallium (Ga), titanium (Ti), zirconium (Zr) and hafnium (Hf) is added to zinc halide.

(Mercury)

In the first embodiment, it is preferable that mercury (Hg) is not contained at all for reducing environmental load substances, but it may be contained at the level of impurities.

[Other configurations]

In the present embodiment, the following configurations can be selectively added as desired.

1. (Outer Pipe)

As an light emitting tube, a component comprising an airtight container, a pair of electrodes and a discharging medium can be arranged inside an outer pipe. The outer pipe may take any shape or size as desired. In addition, the interior of the outer pipe may be airtight to exterior thereof, or may be communicated to outside air. In the former case, inert gas such as argon, nitrogen, etc. can be sealed as necessary. Further, the outer pipe can be formed by using transparent materials such as quart glass, hard glass, and soft glass.

2. (Reflecting mirror)

An airtight container can be securely arranged in a predetermined location in a reflecting mirror. Note that a dichroic mirror of infrared transmitting type/visible light reflecting type formed on the inner surface of a glass base may be used as a reflecting mirror.

[Function of the present embodiment]

In the present embodiment, an ionizing medium contains thulium (Tm) halide that mainly emits visible light and zinc halide of 20% to 90% by mass with respect to all metal halides. As a consequence, even in a high-pressure discharge lamp of short-arc type wherein an inter-electrode distance formed between a pair of electrodes sealed into an airtight container is 2 mm or less, surprisingly the lamp voltage can clearly rise by increasing the enclosure ratio of zinc halide as described above.

In addition to this, since thulium (Tm) halide can also act to increase the lamp voltage in cooperation with zinc halide, it becomes possible to set the lamp voltage of the high-pressure discharge lamp of short arc type to a required value, for example, approximately 80V. Additionally, not only thulium has ionization potential that is relatively higher than that of alkali metal such as sodium, and thus enclosure of thulium halide does not cause voltage reduction, but also when being coexistent with zinc halide, it can have an advantageous effect in increasing the lamp voltage in proportion to the enclosed capacity.

In this manner, if the lamp voltage is higher, increase in the lamp current can be easily avoided when required lamp power is applied, which thus facilitates designing of an electrode or an airtight container, and also downsizes a lightning circuit and makes it cheaper.

Therefore, according to the first embodiment, a high-pressure discharge lamp can be used for projection. In addition, since the lamp is free of mercury, it poses no problem of environmental load.

Now, for light emission by a high-pressure discharge lamp, light emission from thulium becomes dominant in the case where thulium halide is primarily enclosed as a main component of luminous metal halide. Since light emission of thulium has many bright-line spectra in the vicinity of the peak wavelength of 555 nm of the specific visibility curve, it can achieve high luminous efficiency as a whole.

In the present embodiment, rated lamp wattage of a high-pressure discharge lamp can be freely set from a wide range of values, to an arbitrary value of, for example, a few kW or less. Also, its use should not be limited to projection, and it may be used for various purposes. Therefore, depending on the rated lamp wattage and use, an airtight container may take a suitable shape and size, and the enclosed capacity of an ionizing medium may take any appropriate value.

A high-pressure discharge lamp of a second embodiment comprises: a translucent airtight container having a discharge space therein; a pair of electrodes sealed in the airtight container, the electrodes having an inter-electrode distance D of 2 mm or less and facing the discharge space; and an ionizing medium sealed in the airtight container and substantially being mercury-free while it contains thulium (Tm) halide, zinc (Zn) halide and rare gas, the mass sum of the zinc (Zn) halide and the thulium (Tm) halide accounting for 50% to 95% by mass of all metal halides, wherein a ratio $V_1/D$ of a lamp voltage $V_1$ (V) to the inter-electrode distance D (mm) satisfies the following formula.

$$20 < V_1/D < 100$$

The second embodiment is different from the first embodiment in that the mass sum of zinc (Zn) halide and thulium (Tm) halide is considered as a main component of the ionizing medium by defining the mass sum to a predetermined value range at a ratio to all halides sealed in the airtight container. In other words, the above ratio of the mass sum of zinc (Zn) halide and thulium (Tm) halide is a dominant element to the lamp voltage of the high-pressure discharge lamp with respect to the ionizing medium. Then, within a range of the above ratio, the high-pressure discharge lamp of short-arc type can achieve a desired high lamp voltage. However, when the above ratio is less than 50% by mass, it becomes impossible to obtain the desired high lamp voltage as elevation of the lamp voltage is saturated. In addition, when the above ratio exceeds 95% by mass, it causes inconvenience in obtaining desired color rendering property and/or color temperature.

As one example of the second embodiment, it is possible to make the zinc (Zn) halide less than 20% to 90% by mass of all the metal halides sealed in the airtight container. This also enables acquisition of the function and advantageous effect of the first embodiment.

As another working example of the second embodiment, it is accepted that configuration can be made such that A/B satisfies the following formula:

$$0.6 < A/B < 2.5$$

where A denotes a mass of zing (Zn) halide and B denotes a mass of thulium (Tm) halide.

The example defines a preferred range of the enclosure ratio of zinc (Zn) halide and thulium (Tm) halide. Although the lamp voltage increases as with increasing this ratio and the luminous efficiency is lowered, zinc (Zn) halide and Thulium (Tm) halide can form the desired high lamp voltage in cooperation with each other, and also obtain the desired visible light, within the range shown by the above mathematical formula. However, if the A/B is not more than 0.6, it becomes impossible to obtain the desired high lamp voltage. If the A/B is 2.5 or more, it becomes impossible to obtain visible light that can withstand practical use.

A high-pressure discharge lamp of a third embodiment comprises: a translucent airtight container having a discharge space therein; a pair of electrodes sealed in the airtight container, the electrodes having an inter-electrode distance D of 2 mm or less and facing the discharge space; and an ionizing medium sealed in the airtight container and substantially being mercury-free while it contains thulium (Tm) halide, zinc (Zn) halide and rare gas, the zinc (Zn) halide having the maximum enclosure ratio, and the total quantity of all metal halides being 12 mg or more per unit internal volume (1 cc) of the airtight container, wherein a ratio $V_1/D$ of a lamp voltage $V_1$(V) to the inter-electrode voltage D (mm) satisfies the following formula:

$$20 < V_1/D < 100$$

The third embodiment is different from the first and second embodiments in that the enclosure ratio and enclosed capacity of zinc (Zn) halide are defined to a predetermined range. When the above two conditions are satisfied simultaneously, the lamp voltage will increase. In contrast, when zinc halide does not have the maximum enclosure ratio or the enclosed capacity of zinc halide is less than 12 mg, it is impossible to increase the lamp voltage to a predetermined level.

As one example in the third embodiment, it is possible to make zinc (Zn) halide less than 20% to 90% by mass of all the metal halides sealed in the airtight container. This also enables acquisition of the function and advantageous effect of the first embodiment.

As a second example in the third embodiment, configuration can be made such that the mass sum of zing (Zn) halide and thulium (Tm) halide accounts for 50% to 95% by mass of all the metal halides. This also enables acquisition of the function and advantageous effect of the second embodiment.

As a third example in the third embodiment, configuration can be made to include both the first and second examples described above. This also enables acquisition of the function and advantageous effect of the first and second embodiments.

In the first to third embodiments and their examples, the following configuration can be adopted as one of the preferred examples among ionizing media described above. That is, the configuration is made such that the ionization potential of metals forming all the metal halides is 5.4 eV or more. With this configuration, the lamp voltage per unit inter-electrode distance is further increased. In the following, the ionization potential (eV) of main metal that can be sealed, as halide, in the airtight container in the respective embodiments of the present invention is represented in parentheses following the metal element symbols:

(1) Metal that mainly emits light: Tm (6.18), Pr (5.42), Ce (5.47), Sm (5.63), In (5.786), T1 (6.108).
(2) Metal that mainly contributes to formation of lamp voltage: Al (5.986), Zn (9.394), Mg (7.644), Fe (7.87), Co (7.864), Cr (6.765), Ni (7.635), Mn (7.432), Sb (8.642), Bi (7.287), Re (9.323), Ga (5.999), Ti (6.84), Zr (6.837), Hf (7).

Correspondingly, for alkali metals such as Na (ionization potential of 5.14 eV) and Li (5.392 eV), their ionization potential is less than 5.40 eV, and the lamp voltage drops as the enclosed capacity increases. Thus, in effect, alkali metals shall not be contained in the respective embodiments. However, as the object as described below, it is possible to enclose alkali metals of less than 10% by mass and preferably about 5% by mass alone or as halide. It is accepted to enclose Na for the purpose of improving the luminous efficiency due to increased visible light and to enclose Cs (ionization potential of 3.894 eV) for the purpose of stabilization of discharge arc and/or optimization of light emitting tube temperature distribution.

An optical device of another embodiment of the present invention is characterized by comprising an optical device main body comprising an image projection mechanism; and the high-pressure discharge lamp according to any one of claims 1 to 5 which is arranged in the optical device main body as a light source for image projection.

In the present embodiment, the optical device refers to a device comprising the image projection mechanism provided with the high-pressure discharge lamp according to claims 1 to 3 as a light source, and applies to, for example, a liquid crystal projector, an overhead projector and the like. In addition, the optical device main body means remaining parts of the optical device, excluding the high-pressure discharge lamp.

According to the first to third embodiments, it is possible to provide a mercury-free high-pressure discharge lamp that is of short-act type yet can have lamp voltage as high as that of a mercury-contained high-pressure discharge lamp, and an optical device comprising the same.

In the following, with reference to the drawings, the respective embodiments for carrying out the present invention will be described.

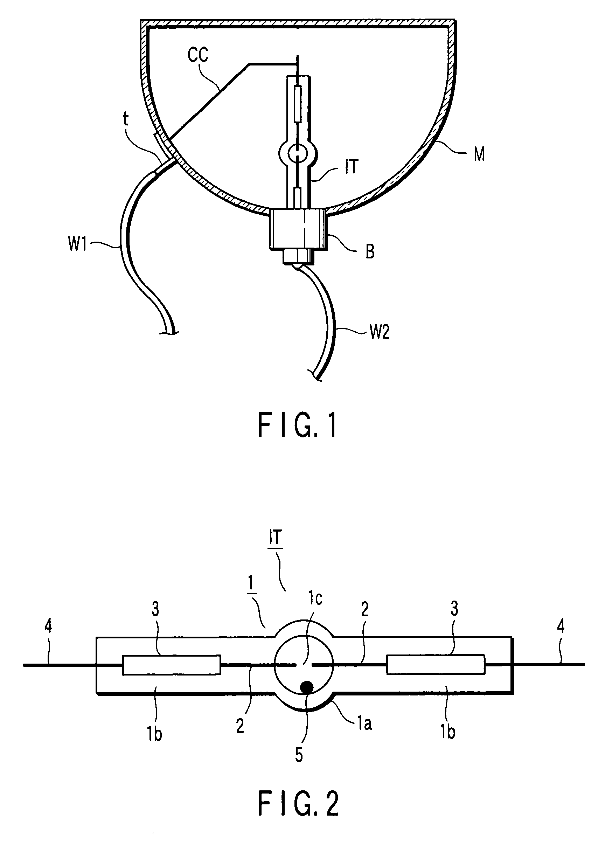

FIGS. 1 and 2 show one embodiment of the high-pressure discharge lamp of the invention. FIG. 1 is a conceptual overall sectional view, and FIG. 2 is an enlarged front view of an light emitting tube. The present embodiment is a high-pressure discharge lamp for a liquid crystal projector as one application of the present invention. In the figures, the high-pressure discharge lamp HDL comprises the light emitting tube IT, a reflecting mirror, a connection conductor CC, a cap B, and feeder wires W1, W2. Note that the lamp voltage per unit inter-electrode distance is set to a value greater than 20V/mm and smaller than 100V/mm.

The light emitting tube IT comprises an airtight container 1, a pair of electrodes 2, 2, sealed metal foil 3, an external lead wire 4 and an ionizing medium.

The airtight container 1 is made of quartz glass, and comprises a surrounding area 1a and a pair of sealed parts 1b. The surrounding area 1a is hollow with spherically shaped profile, and an elongated substantially ellipsoidal discharge space 1c is formed inside the surrounding area 1a. The internal volume of the discharge space 1c may be 0.5 cc and preferably 0.1 cc or less. The pair of sealed parts 1b, 1b is integrally molded at both ends of the surrounding area 1a, and have the sealed metal foil 3, to be described later, buried therein.

The pair of electrodes 2, 2 is comprised of a tungsten wire, and an end and a part of an intermediate part are exposed into the discharge space 1c. A proximal end of the electrodes 2 is welded to the sealed metal foil (to be described later) buried in the sealing parts 1b, and is also arranged in a predetermined position of the air container with the intermediate part loosely supported by the sealed parts 1b.

The sealed metal foil 3 is comprised of molybdenum foil, and buried air tight in the sealed parts 1b of the airtight container 1.

The external lead wire 4 has its end welded to the sealed metal foil 3, and also has its proximal end derived from the sealed parts 1b to the external.

The ionizing medium contains metal halide 5 and rare gas, and does not substantially contain mercury.

The metal halide 5 is enclosed with thulium (Tm) halide and zinc (Zn) halide as main components. The thulium (Tm) halide mainly emits desired light and contributes to formation of the lamp voltage. The zinc (Zc) halide mainly contributes to formation of the lamp voltage.

Also, the ionizing medium is adjusted so as to satisfy at least any one of the following conditions in addition to the above.

(1) Zinc (Zn) halide is less than 20 to 90% by mass of all the metal halides sealed in the airtight container 1.

(2) The mass sum of zinc (Zn) halide and thulium (Tm) halide accounts for 50% to 95% by mass of all the metal halides sealed in the airtight container 1. In addition, preferably, an enclosure ratio A/B of an enclosed capacity A of zinc halide to an enclosed capacity B of thulium halide satisfies the mathematical formula of $0.6 < A/B < 2.5$.

(3) The total quantity of all the metal halides to be sealed in the airtight container 1 is 12 mg or more per unit internal volume (1cc) of the airtight container 1.

The reflecting mirror M is saucer-shaped having a rotating quadratic surface, wherein a reflecting surface is formed on the inner surface of a glass base, the light emitting tube IT is supported along the central axis, and a front opening is closed by a transparent glass plate 6. The reflecting surface is comprised of a dichroic reflective coat of infrared transmitting type/visible light reflecting type. Then, inside the reflecting mirror M, the light emitting tube IT is supported on the central axis by way of the cap B to be described later.

The connection conductor CC has one end thereof connected to the external lead wire 4 derived from the light emitting tube IT located on the side of the opening end of the reflecting mirror M, and the other end thereof penetrating through the reflecting mirror M and connected to a relay terminal t that is firmly fixed to the outer surface thereof.

The cap B is mounted onto one end of the light emitting tube IT, and supports the light emitting tube IT, as described above, by being connected to the external lead wire (not shown) derived from the light emitting tube IT to the top side of the reflecting mirror M, and by being firmly fixed to the outer surface of the top of the reflecting mirror M.

The feeder wires W1, W2 are comprised of a wire harness, etc. The feeder wire W1 is connected to the relay terminal t and the feeder wire W2 is connected to the cap B, thereby making a connection between a lightning circuit (not shown) and the high-pressure discharge lamp HDL.

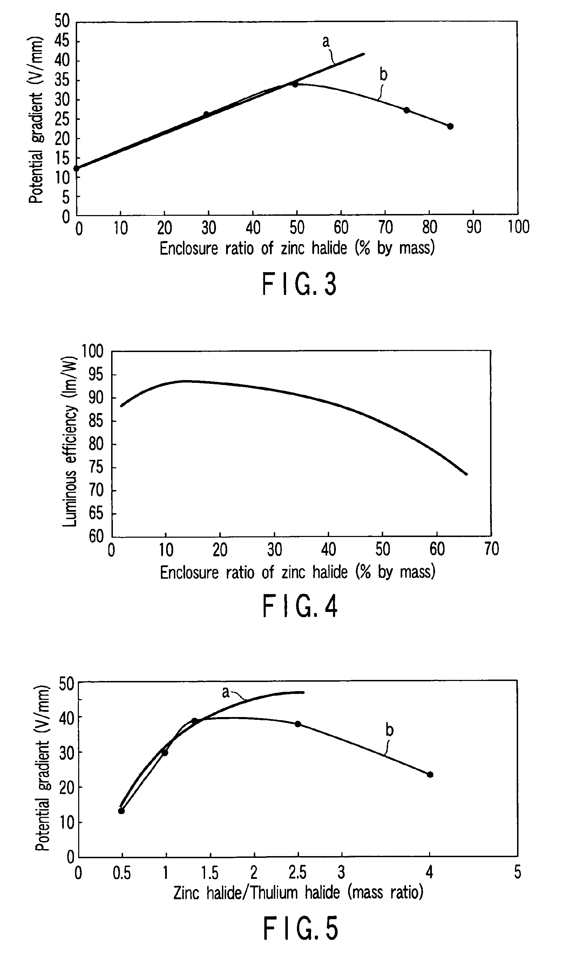

Next, with reference to FIGS. 3 to 6, explanation will be given for a relationship among the enclosure ratio of zinc halide to all the metal halides, the mass ratio A/B of the enclosed capacity A of zinc halide to the enclosed capacity B of thulium halide, the lamp voltage, and the luminous efficiency.

FIG. 3 shows curves a and b each showing a relationship between a change in the enclosure ratio of zinc halide to all the metal halides and the potential gradient. In the figure, the abscissa represents the enclosure ratio (% by mass) of Zn (zinc) halide, and the ordinate represents the potential gradient (V/mm), respectively.

As can be seen from the curve a in the figure, the potential gradient, and thus the lamp voltage is substantially directly proportional to the enclosure ratio of zinc halide. If the enclosure ratio is 20% by mass or more, approximately 21V can be acquired for every inter-electrode distance of 1 mm.

The curve b in FIG. 3 shows a relationship between the enclosure ratio (% by mass) of zinc halide and the potential gradient (V/mm) when an enclosure amount of thulium halide is increased. In this case, 80% by mass of thulium halide of all the enclosed metal halides except for the zinc halide is enclosed in the lamp. According to the curve b, the potential gradient shows the peak value when the enclosure ratio of zinc halide is 50% by mass and the potential gradient shows a trend of lowering when the enclosure ration of zinc halide exceeds 50% by mass. This peak value of the potential gradient is thought to be caused from a function of a composite salt which is formed between the zinc halide and thulium halide when the ratio of mass between the zinc halide and the thulium halide becomes at about 5:4. Particularly, in order to maintain a high potential gradient in a case when the thulium halide exceeds 50% by mass of the metal halides except for the zinc halide, it is preferable that the enclosure ratio of the zinc halide is in the range of 40% to 60% with respect to that of all the metal halides.

FIG. 4 is a graph showing a relationship between a change in the enclosure ratio of zinc halide to all the metal halides and the luminous efficiency. In the figure, the abscissa represents the enclosure ratio (% by mass) of Zn (zinc) halide, and the ordinate represents the luminous efficiency (1m/W), respectively.

As seen in the figure, although the luminous efficiency has the peak around 13% with respect to the change in the enclosure ratio of zinc halide, the luminous efficiency is high at every enclosure ratio and the change thereof is also gradual.

FIG. 5 is a graph showing a relationship between zinc halide/thulium halide and the potential gradient. In the figure, the abscissa represents zinc halide/thulium halide (mass ratio), and the ordinate represents the potential gradient (V/mm), respectively.

As seen from the curve $\underline{a}$ in the figure, the potential gradient increases as zinc halide/thulium halide (mass ratio) rises. However, as the ratio rises, it tends to be saturated, and if zinc halide/thulium halide (mass ratio) is 0.6 or more, the potential gradient of 20V/mm can be obtained.

Curve b in FIG. 5 shows a relationship between the mass ratio of zinc halide/thulium halide and the potential gradient in a case when the inner diameter of a spherical enclosure of the light emitting tube is about 6.5 mm, the input power is maintained at 100W, and the tube wall load is set at about 75W/cm$^2$. When the lamp is operated with such a high tube wall load, the potential gradient shows a peak value at a mass ratio of zinc halide/thulium halide of about 1.8. When the mass ratio of zinc halide/thulium halide exceeds 1.8, the potential gradient shows a decreasing trend.

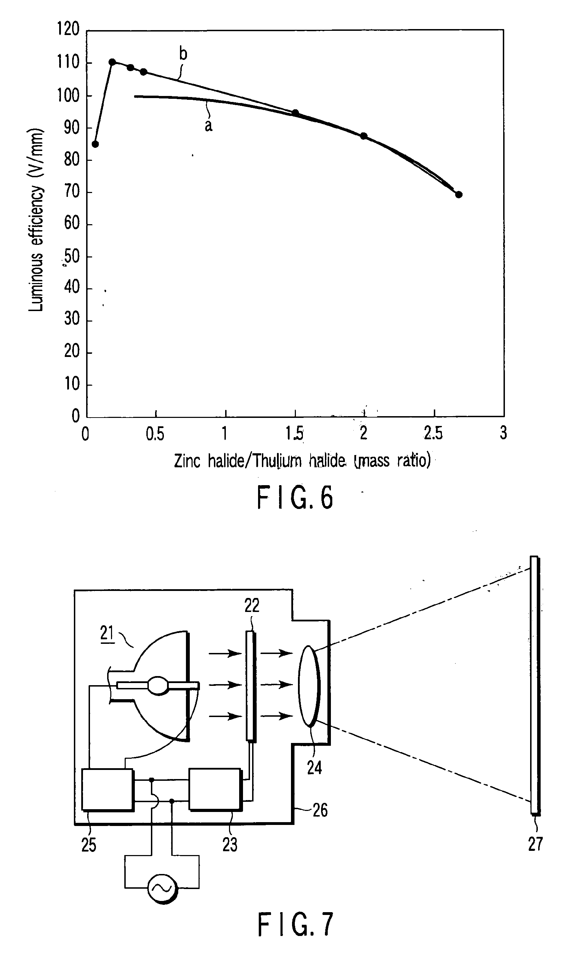

FIG. 6 is a graph showing a relationship between zinc halide/thulium halide and the luminous efficiency. In the figure, the abscissa represents zinc halide/thulium halide (mass ratio), and the ordinate represents the luminous efficiency (1m/W), respectively.

As can be seen from the curve $\underline{a}$ in the figure, the luminous efficiency decreases as zinc halide/thulium halide (mass ratio) increases, and yet as the above ratio grows, the tendency becomes marked. However, if the mass ratio of zinc halide/thulium halide is less than 2.5, the luminous efficiency of 70 1m/W can be maintained.

The curve b in FIG. 6 shows a relationship between the ratio zinc halide/thulium halide and the luminous efficiency (lm/W) in a case when the inner diameter of a spherical enclosure of the light emitting tube is about 6.5 mm, the input power is maintained at 100W, and the tube wall load is set at about 75W/cm$^2$ as in the case of the curve b shown in FIG. 5. When the lamp is operated with such a high tube wall load, the luminous efficiency shows a peak value at a mass ratio of zinc halide/thulium halide of about 0.2. However, when the ratio of zinc halide/thulium halide is set at 0.2, the potential gradient becomes at a relatively low value of 15V/mm as shown by the curve b in FIG. 5. If this is the case, a large lamp current should be supplied to the light emitting tube when the lamp is required to be operated at 100W. When an excess lamp current flows through the lamp, a power loss in the lightening device will be increased. Further, the electrodes of the light emitting tube should be changed with a high cost electrodes having a particular shape. This particular and high cost electrode structure is necessary for maintaining a predetermined lamp life but is not preferable. Further, as can be seen from the curves a and b in FIG. 6, the luminous efficiency does not decrease abruptly until the mass ratio of zinc halide/thulium halide exceeds 2.5. Accordingly, when the mass ratio of zinc halide/thulium halide is set between a range of 0.6 to 2.5, a high luminous efficiency and a sufficient potential gradient for designing a lightening device and an electrode thereof can be obtained.

[Example 1]

Airtight container: Maximum inside diameter of 6.5 mm, made of quarts glass
A pair of electrodes: Shaft diameter of 0.45 mm, and an inter-electrode distance of 2.0 mm. The ends of the electrodes are melted and hemispherically shaped. Ionizing medium: $ZnI_2$-T1I-$TmI_3$ = 4 mg (57:7:36)

Numerals in the parenthesis denote the enclosure ratio (% by mass), Xel.32MPa.

Electric property: Lamp voltage of 70V, lamp current of 2.19A, and lamp power of 150W

Lamp property: Total flux of 9000 lm, luminous efficiency of 60 1m/W, color temperature of 5700K, and average color rendering evaluation number Ra82

[Example 2]

Ionizing medium: $ZnI_2$-T1I-$TmI_3$-CsI = 4 mg (57:7:31:5)

Numerals in the parenthesis denote the enclosure ratio (% by mass), Xe1.32MPa.

Other specifications are similar to those in Example 1. Electric property: Lamp voltage of 65V, lamp current of 2.36 A, and lamp power of 150 W
Lamp property: Total flux of 8200 lm, luminous efficiency of 55 1m/W, color temperature of 5200K, and average color rendering evaluation number Ra84

FIG. 7 is a conceptual sectional view showing a liquid crystal projector as one embodiment of the optical device of the present invention. In the figure, reference numeral 21 denotes a high-pressure discharge lamp; 22 denotes liquid crystal display means; 23 denotes image control means; 24 denotes an optical system; 25 denotes a high-pressure discharge lamp lightening apparatus; 26 denotes a main body case; and 27 denotes a screen.
The high-pressure discharge lamp 21 is one embodiment in the high-pressure discharge lamp of the present invention as shown in FIG. 1.
The liquid crystal display means 22 displays images to be projected by liquid crystal, and is illuminated from the rear by the high-pressure discharge lamp 21.
The image control means 23 is provided to drive and control the liquid crystal display means 22, and optionally, may comprise a television receiving capability.
The optical system 24 projects light having passed through the liquid crystal display means 22 onto the screen 27.
The high-pressure discharge lamp lightening apparatus 25 turns on the high-pressure discharge lamp 21.
The main body case 26 houses the above respective components 21 to 26.

**Claims**

1. A high-pressure discharge lamp **characterized by** comprising:

   a translucent airtight container (1) having a discharge space (1c) therein;
   a pair of electrodes (2) sealed in the airtight container, the electrodes having an inter-electrode distance D of 2 mm or less and facing the discharge space; and
   an ionizing medium sealed in the airtight container (1) and substantially being mercury-free while it contains thulium (Tm) halide, zinc (Zn) halide and rare gas, the zinc (Zn) halide being less than 20% to 90% by mass of all metal halides sealed in the airtight container, wherein a ratio $V_1/D$ of a lamp voltage $V_1$ (V) to the inter-electrode distance D (mm) satisfies the following formula.

$$20 < V_1/D < 100$$

2. A high-pressure discharge lamp **characterized by** comprising:

   a translucent airtight container (1) having a discharge space (1c) therein;
   a pair of electrodes (2) sealed in the airtight container, the electrodes having an inter-electrode distance D of 2 mm or less and facing the discharge space; and
   an ionizing medium sealed in the airtight container (1) and substantially being mercury-free while it contains thulium (Tm) halide, zinc (Zn) halide and rare gas, the mass sum of the zinc (Zn) halide and the thulium (Tm) halide accounting for 50% to 95% by mass of all metal halides, wherein a ratio $V_1/D$ of a lamp voltage $V_1$ (V) to the inter-electrode distance D (mm) satisfies the following formula.

$$20 < V_1/D < 100$$

3.  The high-pressure discharge lamp according to claim 2, **characterized in that** A/B satisfies the following formula:

$$0.6 < A/B < 2.5$$

where A denotes a mass of the zinc (Zn) halide and B denotes a mass of the thulium (Tm) halide.

4.  A high-pressure discharge lamp **characterized by** comprising:

    a translucent airtight container (1) having a discharge space (1c) therein;
    a pair of electrodes (2) sealed in the airtight container, the electrodes having an inter-electrode distance D of 2 mm or less and facing the discharge space; and
    an ionizing medium sealed in the airtight container and substantially being mercury-free while it contains thulium (Tm) halide, zinc (Zn) halide and rare gas, the zinc (Zn) halide having the maximum enclosure ratio, and the total quantity of all metal halides being 12 mg or more per unit internal volume (1 cc) of the airtight container (1), wherein a ratio $V_1/D$ of a lamp voltage $V_1$(V) to the inter-electrode voltage D (mm) satisfies the following formula:

$$20 < V_1/D < 100$$

5.  The high-pressure discharge pump according to any one of claims 1 to 4, **characterized in that** the ionizing medium has its ionization potential of 5.40 eV or more.

6.  The high-pressure discharge lamp according to any one of claims 1 to 5, **characterized in that** the ionizing medium contains alkali metal of less than 10% by mass with respect to all the metal halides.

7.  An optical device **characterized by** comprising:

    an optical device main body (26) comprising an image projection mechanism 22, 24); and
    the high-pressure discharge lamp (21) as described in any one of claims 1 to 6, which is arranged in the optical device main body (26) as a light source for image projection.

F I G. 1

F I G. 2

F I G. 3

F I G. 4

F I G. 5

FIG. 6

FIG. 7